# EUROPEAN PATENT APPLICATION

(11) **EP 4 712 196 A1**
(43) Date of publication of application: **18.03.2026**
(21) Application number: 24873068.1
(22) Date of filing: 27.09.2024
(51) Int. Cl.: H01M 10/0587, H01M 10/04, H01M 50/188, H01M 50/559, H01M 50/167, H01M 50/567, H01M 50/152, H01M 50/213, H01M 50/249

(54) **ELECTRODE ASSEMBLY, CYLINDRICAL BATTERY, AND BATTERY PACK AND VEHICLE INCLUDING SAME**

(30) Priority: 27.09.2023 KR 20230130705
(71) Applicant: LG Energy Solution, Ltd., Seoul 07335 (KR)
(72) Inventor: PARK, Min-Gu, Daejeon 34122 (KR); KIM, Jun-Su, Daejeon 34122 (KR); SHIN, Hang-Soo, Daejeon 34122 (KR); LEE, Myung-An, Daejeon 34122 (KR); LEE, Hye-Jin, Daejeon 34122 (KR)
(74) Representative: Goddar, Heinz J.
(86) International application number: PCT/KR2024/014792
(87) International publication number: WO 2025/071361

(57) **Abstract**

The present disclosure provides an electrode assembly, a cylindrical battery, a battery pack and a vehicle. The electrode assembly is an electrode assembly in which a first electrode, a second electrode, and a separator interposed therebetween are wound around a winding axis to define a core and an outer circumference, wherein a winding start portion of the first electrode is positioned closer to the core than a winding start portion of the second electrode and extends further in a direction opposite to a winding direction, wherein a winding end portion of the first electrode is positioned closer to the outer circumference than a winding end portion of the second electrode and extends further in the winding direction, and wherein in a cross-section of the electrode assembly perpendicular to the winding axis, the winding end portion of the second electrode is included in a fan-shaped region having a circumferential angle corresponding to an angle of the winding direction between the winding start portion of the first electrode and the winding start portion of the second electrode.

## Description

### TECHNICAL FIELD

The present disclosure relates to an electrode assembly, a cylindrical battery, and a battery pack and a vehicle including the same.

The present application claims priority to Korean Patent Application No. 10-2023-0130705 filed on September 27, 2023, and Korean Patent Application No. 10-2024-0131910 filed on September 27, 2024, in the Republic of Korea, the disclosures of which are incorporated herein by reference.

### BACKGROUND ART

Secondary batteries that are easily applicable to various product groups and have electrical characteristics such as high energy density are universally applied not only to portable devices but also to electric vehicles (EVs) or hybrid electric vehicles (HEVs) driven by an electric drive source.

These secondary batteries are attracting attention as a new energy source to improve eco-friendliness and energy efficiency because they have the primary advantage that they can dramatically reduce the use of fossil fuels as well as the secondary advantage that no by-products are generated from the use of energy.

Secondary batteries currently widely used in the art include lithium ion batteries, lithium polymer batteries, nickel cadmium batteries, nickel hydrogen batteries, nickel zinc batteries, and the like. A secondary battery has an operating voltage of about 2.5V to 4.5V. Therefore, when a higher output voltage is required, a battery pack may be configured by connecting a plurality of secondary batteries in series. In addition, a plurality of secondary batteries may be connected in parallel to form a battery pack according to the charge/discharge capacity required for the battery pack. Accordingly, the number of batteries included in the battery pack and the form of electrical connection may be variously set according to the required output voltage and/or charge/discharge capacity.

Meanwhile, as a kind of secondary battery, there are known cylindrical, rectangular, and pouch-type batteries. In the case of a cylindrical battery, a separator serving as an insulator is interposed between a positive electrode and a negative electrode, and they are wound to form an electrode assembly in the form of a jelly roll, which is inserted into a battery housing (can) to configure a battery. In addition, a strip-shaped electrode tab may be connected to an uncoated portion of each of the positive electrode and the negative electrode, and the electrode tab electrically connects the electrode assembly and an electrode terminal exposed to the outside. For reference, the positive electrode terminal is a cap of a sealing body that seals the opening of the battery housing, and the negative electrode terminal is the battery housing. However, according to the conventional cylindrical battery having such a structure, since current is concentrated in the strip-shaped electrode tab coupled to the uncoated portion of the positive electrode and/or the uncoated portion of the negative electrode, the current collection efficiency is not good due to large resistance and large heat generation.

For small cylindrical batteries with a form factor 1865 (diameter: 18 mm, height: 65 mm) or a form factor 2170 (diameter: 21 mm, height: 70 mm), resistance and heat are not a major issue. However, when the form factor is increased to apply the cylindrical battery to an electric vehicle, the cylindrical battery may ignite while a lot of heat is generated around the electrode tab during the rapid charging process.

In order to solve this problem, there is provided a cylindrical battery (so-called tab-less cylindrical battery) in which the uncoated portion of the positive electrode and the uncoated portion of the negative electrode are designed to be positioned at the top and bottom of the jelly-roll type electrode assembly, respectively, and the current collector is welded to the uncoated portion to improve the current collecting efficiency.

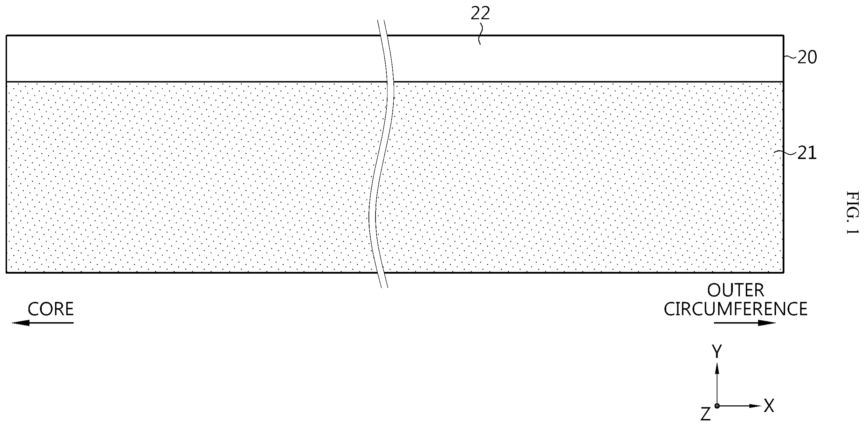

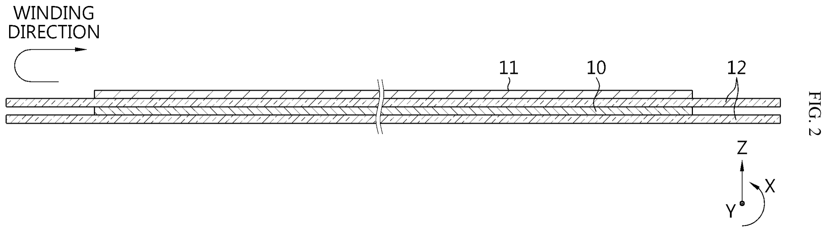

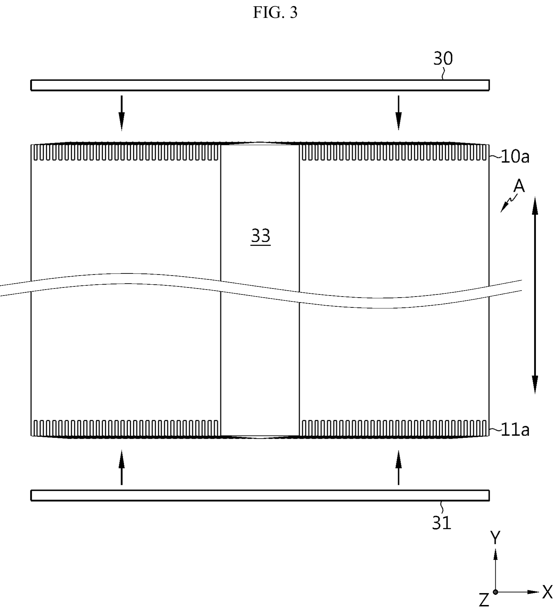

FIGS. 1 to 3 are diagrams showing a process of manufacturing a tab-less cylindrical battery. FIG. 1 shows the structure of an electrode, FIG. 2 shows a process of winding the electrode, and FIG. 3 shows a process of welding a current collector to a bending surface area of an uncoated portion.

Referring to FIGS. 1 to 3, a positive electrode 10 and a negative electrode 11 include a sheet-shaped current collector 20 having a pair of short sides and a pair of long sides, and a coated portion 21 formed by an active material layer coated on a surface of the current collector 20. In addition, the positive electrode 10 and the negative electrode 11 include an uncoated portion 22 on one long side along a winding direction X.

An electrode assembly A is manufactured by sequentially stacking the positive electrode 10 and the negative electrode 11 together with two sheets of separators 12 as shown in FIG. 2 and then winding them in one direction X. The stacking order of the positive electrode 10 and the negative electrode 11 may be opposite to that shown in the drawings. The uncoated portions of the positive electrode 10 and the negative electrode 11 are arranged in opposite directions based on the winding axis direction of the electrode assembly A and extends and exposed to the outside of the separator 12.

After the winding process, the uncoated portion 10a of the positive electrode 10 and the uncoated portion 11a of the negative electrode 11 are bent toward the core. For smooth folding, the uncoated portion 10a of the positive electrode 10 and the uncoated portion 11a of the negative electrode 11 may be divided into a plurality of independently foldable segments. Thereafter, current collectors 30, 31 are coupled to the folded uncoated portions 10a, 11a, respectively, by welding.

An electrode tab is not separately coupled to the positive electrode uncoated portion 10a and the negative electrode uncoated portion 11a, the current collectors 30, 31 are connected to external electrode terminals, and a current path is formed with a large cross-sectional area along the winding axis direction of electrode assembly A (see arrow), which has an advantage of lowering the resistance of the battery. This is because resistance is inversely proportional to the cross-sectional area of the path through which the current flows.

Meanwhile, the development of a cylindrical battery with a form factor of 4680 for use in electric vehicles is being actively pursued. The cylindrical battery has a diameter of 46 mm and a height of 80 mm. In the electric vehicle market, there is a need to increase the capacity of the battery to increase the driving range. Therefore, the diameter and height of the cylindrical battery are expected to increase further in the future.

As the diameter of the cylindrical battery increases, the diameter of the electrode assembly A also increases accordingly. Lithium-ion batteries are designed to have a larger negative electrode capacity than a positive electrode capacity. Therefore, the length of the negative electrode 11 is longer than the length of the positive electrode 10 in the winding direction of the electrode assembly A.

Considering the difference in length between the electrodes, when electrode assembly A is wound, the winding of the negative electrode 11 starts before the positive electrode 10, and the winding of the negative electrode 11 is completed after the positive electrode 10. Due to this winding characteristic of the electrode assembly A, if the diameter of the electrode assembly A increases, it becomes difficult to manage the circularity of the electrode assembly A. Here, the circularity refers to a circularity of the cross-section when the electrode assembly A is cut perpendicular to the winding axis direction.

According to the study, the circularity of the electrode assembly A varies depending on where the winding start point and the winding end point of the positive electrode 10 and the negative electrode 11 are positioned. In addition, the circularity of the electrode assembly A is also affected by the meandering of the electrode and the tolerance of the winding equipment. Therefore, the circularity of the electrode assembly A becomes more difficult to manage as the diameter of the electrode assembly A increases.

The reduction in circularity of the electrode assembly A reduces the yield of good products in the process of accommodating the electrode assembly A in the battery housing. This is because the surface of the electrode assembly A with reduced circularity may be damaged when the outer surface of the electrode assembly A comes into contact with the inner surface of the cylindrical housing during the process of accommodating of the electrode assembly A in the cylindrical housing.

The decrease in circularity of the electrode assembly A also affects the appearance of the cylindrical battery. Since the battery housing is thin, if the circularity of the electrode assembly A is not good, the shape of the battery housing is deformed by the electrode assembly A. In particular, as the charge/discharge cycle of the cylindrical battery increases, the electrode assembly A swells, so the effect of the circularity of the electrode assembly A on the circularity of the cylindrical battery becomes greater.

Cylindrical batteries are assembled into a battery pack using an assembly member. The assembly member has a structure capable of stably supporting an outer circumference of the cylindrical battery. The assembly member may be a spacer interposed between arrays of cylindrical batteries or a side cooling unit interposed between arrays of cylindrical batteries. The assembly member may have a curved structure to stably support a side surface of the cylindrical battery. The curved structure may have a radius of curvature corresponding to a side surface of the cylindrical battery.

If the cylindrical battery has good circularity, the cylindrical battery may adhere well to the curved structure of the assembly member. Meanwhile, if the circularity of the cylindrical battery is poor, the cylindrical battery may not adhere well to the curved structure of the assembly member and may cause a gap exceeding the assembly tolerance.

A gap exceeding the assembly tolerance may deteriorate the assembly quality of the battery pack and affect the cooling efficiency. In addition, a gap exceeding the assembly tolerance may cause stress in a specific part of the battery pack, which may not only cause deformation or cracks in the assembly member, but also deform the appearance of the cylindrical battery disposed in the area where the stress is concentrated.

Therefore, in the technical field to which the present disclosure belongs, there is an urgent need for a design of an electrode assembly in which the circularity of the cross-section of the electrode assembly A is good even after winding the electrode assembly A having a large diameter.

### DISCLOSURE

### Technical Problem

The present disclosure is designed to solve the problems of the related art, and therefore the present disclosure is directed to providing an electrode assembly having good circularity by optimizing positions of a winding start portion and a winding end portion of a positive electrode and a negative electrode in a jelly-roll type electrode assembly used in a large-diameter cylindrical battery.

The present disclosure is also directed to providing a cylindrical battery including the electrode assembly having good circularity, a battery pack including the battery, and a vehicle including the battery pack.

The technical objects to be solved by the present disclosure are not limited to the above, and other objects not mentioned herein will be clearly understood by those skilled in the art from the following disclosure.

### Technical Solution

In one aspect of the present disclosure, there is provided an electrode assembly in which a first electrode, a second electrode, and a separator interposed between the first electrode and the second electrode are wound around a winding axis to define a core and an outer circumference, wherein a winding start portion of the first electrode is positioned closer to the core than a winding start portion of the second electrode and extends further in a direction opposite to a winding direction, wherein a winding end portion of the first electrode is positioned closer to the outer circumference than a winding end portion of the second electrode and extends further in the winding direction, and wherein in a cross-section of the electrode assembly perpendicular to the winding axis, the winding end portion of the second electrode is included in a fan-shaped region having a circumferential angle corresponding to an angle of the winding direction between the winding start portion of the first electrode and the winding start portion of the second electrode.

In one aspect, when the circumferential angle of the fan-shaped region is Φ, the winding end portion of the second electrode may be located in a sub-fan-shaped region corresponding to a range of 1/5Φ to 4/5Φ along the winding direction.

In another aspect, when the circumferential angle of the fan-shaped region is Φ, the winding end portion of the second electrode may be located in a sub-fan-shaped region corresponding to a range of 1/4Φ to 3/4Φ along the winding direction.

In still another aspect, when the circumferential angle of the fan-shaped region is Φ, the winding end portion of the second electrode may be located in a sub-fan-shaped region corresponding to a range of 1/3Φ to 2/3Φ along the winding direction.

In the cross-section of the electrode assembly, the winding end portion of the first electrode may be spaced apart from the winding end portion of the second electrode by 0 to 60 degrees, preferably 30 to 60 degrees, along the winding direction.

When a plurality of cross-sections for the electrode assembly are obtained at a plurality of points along a winding axis direction, a maximum outer diameter and a minimum outer diameter of each cross-section are determined, and a difference between a maximum value of the maximum outer diameters and a minimum value of the minimum outer diameters for the plurality of cross-sections is defined as a circularity (unit: mm) of the electrode assembly, the circularity may be 0.30 or less, 0.25 or less, 0.24 or less, 0.20 or less, 0.18 or less, or 0.13 or less.

The circularity may be 0.13 or more and 0.25 or less.

The separator may include an extension wound in the direction opposite to the winding direction from the winding start portion of the first electrode, and the extension may form a plurality of winding turns in the core.

The first electrode may include a first electrode coated portion, on which an active material layer is coated, and a first electrode uncoated portion along the winding direction, the first electrode uncoated portion may include a plurality of segments provided at a long side end of the first electrode and separated by a cut groove formed along the winding direction, the plurality of segments of the first electrode uncoated portion may protrude outwardly from an axial end of the separator along a direction away from an axial end of the first electrode coated portion, and the plurality of segments of the first electrode uncoated portion may be bent toward the core to form a first bending surface area.

The second electrode may include a second electrode coated portion, on which an active material layer is coated, and a second electrode uncoated portion along the winding direction, the second electrode uncoated portion may include a plurality of segments provided at a long side end of the second electrode and separated by a cut groove formed along the winding direction, the plurality of segments of the second electrode uncoated portion may protrude outwardly from an axial end of the separator adjacent to an axial end of the first electrode coated portion, and the plurality of segments of the second electrode uncoated portion may be bent toward the core to form a second bending surface area.

In another aspect of the present disclosure, there is also provided a cylindrical battery comprising: the electrode assembly having any one of the above features; a battery housing having an open end and a closed end and configured to accommodate the electrode assembly through the open end, the battery housing being electrically connected to the first electrode; a sealing body configured to seal the open end of the battery housing; and a terminal electrically connected to the second electrode and having a surface exposed to an outside of the battery housing.

The electrode assembly may include an uncoated portion of the first electrode exposed to an outside of the separator along the winding axis direction, and the cylindrical battery may further comprise a first current collecting plate configured to electrically connect the uncoated portion of the first electrode and an inner surface of the battery housing.

The sealing body may include a cap plate configured to cover the open end of the battery housing, and a gasket interposed between an edge of the cap plate and the open end. An edge of the first current collecting plate may be interposed between the gasket and a sidewall of the battery housing. The battery housing may include a beading portion recessed inward toward the winding axis near the open end, and an edge of the first current collecting plate may be in contact with an inner surface of the beading portion.

An edge of the first current collecting plate may be bent toward the open end and come into contact with a sidewall of the battery housing to be electrically connected to the battery housing.

The terminal may be installed in a perforation hole formed in the closed end of the battery housing to be insulated from the battery housing. The terminal may include a terminal exposing portion exposed through an outer surface of the closed end, and a terminal insert portion extending from the terminal exposing portion and inserted into the battery housing through the perforation hole. A lower edge of the terminal insert portion may be riveted toward an inner surface of the closed end.

The electrode assembly may include an uncoated portion of the second electrode exposed to an outside of the separator along the axial direction. The cylindrical battery may further comprise a second current collecting plate configured to electrically connect the uncoated portion of the second electrode and a lower end of the terminal insert portion.

The sealing body may include a cap plate that seals the open end of the battery housing, and the terminal may be the cap plate.

The sealing body may include a cap plate that covers the open end of the battery housing, an edge of the cap plate may be coupled to the open end, and at least a part of the first current collecting plate may be coupled to the cap plate.

The sidewall of the battery housing may extend substantially in a straight line from the closed end to the open end. An edge of the cap plate may be directly coupled to the open end by welding.

At least a partial region of the cap plate may be electrically connected to the second electrode by welding with a bending surface area formed by the uncoated portion of the first electrode.

In still another aspect of the present disclosure, there is also provided a battery pack comprising a plurality of cylindrical batteries described above.

In still another aspect of the present disclosure, there is also provided a vehicle comprising the battery pack.

### Advantageous Effects

According to the present disclosure, the relative positional relationship between the winding start portion and the winding end portion of the first electrode and the second electrode is controlled so that the circularity of the electrode assembly may be managed at a desirable level. As a result, the yield of good products may be maintained at a desired level in the process of inserting the electrode assembly into the battery housing for manufacturing a cylindrical battery.

In addition, even if the electrode assembly swells during the repeated charging and discharging process of the cylindrical battery, the stress applied to the battery housing is uniformly distributed in the circumferential direction, preventing deformation of the cylindrical battery, thereby maintaining the circularity of the cylindrical battery at a good level.

In addition, cylindrical batteries with well-managed circularity do not form a gap greater than the assembly tolerance with the assembly member during the process of assembling into a battery pack, so good assembly quality may be secured.

In addition, a battery pack having excellent assembly quality and a vehicle including the same may be provided.

In addition, the present disclosure may have several other effects, and such effects will be described in each embodiment, or any description that can be easily inferred by a person skilled in the art will be omitted for an effect.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a plan view showing a structure of an electrode used for manufacturing a conventional tab-less cylindrical battery.
FIG. 2 is a diagram showing an electrode winding process of the conventional tab-less cylindrical battery.
FIG. 3 is a diagram showing a process of welding a current collector to a bending surface area of an uncoated portion in the conventional tab-less cylindrical battery.
FIG. 4 is a plan view showing a laminated state of an electrode and a separator before an electrode assembly according to an embodiment of the present disclosure is wound.
FIG. 5 is a cross-sectional view showing a laminated state of the electrode and the separator before the electrode assembly according to an embodiment of the present disclosure is wound.
FIG. 6 is a cross-sectional view of an electrode assembly according to an embodiment of the present disclosure, taken along a line perpendicular to the axial direction, showing the relative positional relationship between a winding start portion and a winding end portion of a first electrode and a second electrode based on a winding axis.
FIG. 7 is a graph showing a maximum diameter and a minimum diameter of the electrode assembly obtained by simulation according to an embodiment of the present disclosure and the circularity calculated therefrom.
FIG. 8 is a box-and-whisker diagram showing circularity measurement results for electrode assemblies JR of a group A according to an embodiment of the present disclosure and electrode assemblies JR of a group B according to a comparative example.
FIG. 9 is a graph showing the results of measuring the circularity of a cylindrical battery while conducting a charge/discharge cycle experiment on three cylindrical batteries including the electrode assembly manufactured according to an embodiment of the present disclosure.
FIG. 10 is a cross-sectional view showing a cylindrical battery according to an embodiment of the present disclosure, taken along the winding axis direction Y.
FIG. 11 is a cross-sectional view showing a cylindrical battery according to another embodiment of the present disclosure, taken along the winding axis direction Y.
FIG. 12 is a partial cross-sectional view along the winding axis Y direction showing the coupled structure of a cap plate and a battery housing according to another embodiment of the present disclosure.
FIG. 13 is a partial cross-sectional view along the winding axis Y direction showing the coupled structure of a cap plate and a battery housing according to still another embodiment of the present disclosure.
FIG. 14 is a diagram schematically showing a battery pack according to an embodiment of the present disclosure.
FIG. 15 is a diagram schematically showing a vehicle including the battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Also, to aid understanding of the present disclosure, the attached drawings are not drawn to scale and the dimensions of some components may be exaggerated. In addition, the same reference symbols may be assigned to the same components in different embodiments.

Stating that two objects of comparison are 'the same' means that they are 'substantially the same'. Therefore, the term 'substantially the same' may include a deviation that is considered low in the art, for example, a deviation of less than 10%. Also, uniformity of a parameter in a region may mean that the parameter is uniform from an average perspective in the corresponding region.

Although the terms first, second or the like are used to describe different elements, these elements are not limited by the terms. These terms are used to distinguish one element from another, and unless stated to the contrary, a first element may be a second element.

Throughout the specification, unless stated otherwise, each element may be singular or plural.

When an element is "above (or under)" or "on (or below)" another element, the element can be on an upper surface (or a lower surface) of the other element, and intervening elements may be present between the element and the other element on (or below) the element.

Additionally, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

Throughout the specification, "A and/or B" refers to either A or B or both A and B unless expressly stated otherwise, and "C to D" refers to C or greater and D or smaller unless expressly stated otherwise.

For convenience of description, a direction that goes along a lengthwise direction of a winding axis of an electrode assembly wound in a roll shape is herein referred to as an axis direction Y. Additionally, a direction around the winding axis is herein referred to as a circumferential or peripheral direction X. Additionally, a direction that gets closer to or faces away from the winding axis is referred to as a radial direction. Among them, in particular, the direction that gets closer to the winding axis is referred to as a centripetal direction, and the direction that faces away from the winding axis is referred to as a centrifugal direction.

First, an electrode assembly according to an embodiment of the present disclosure is described.

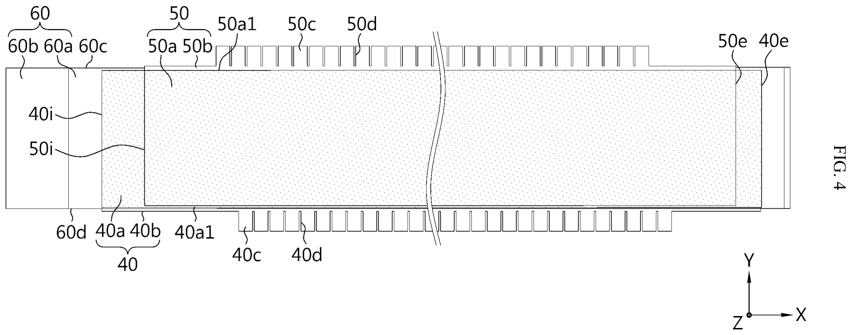

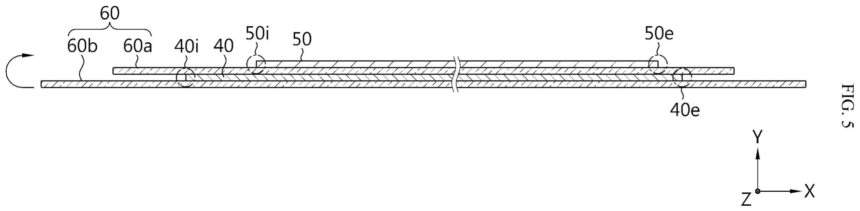

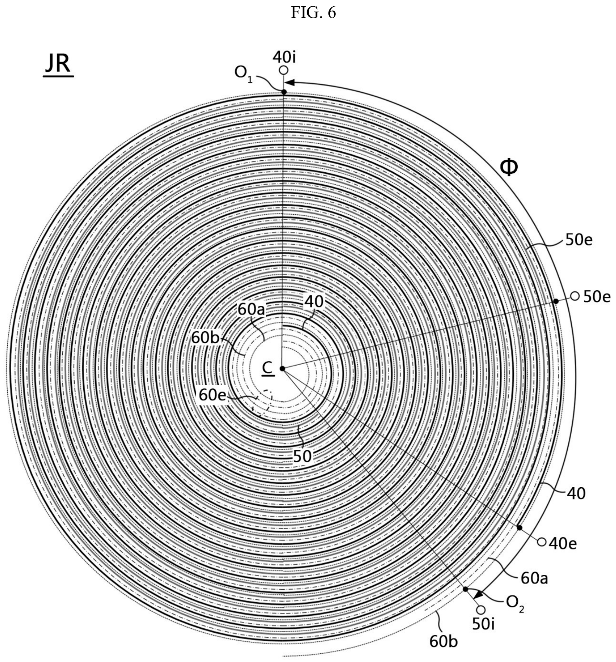

FIGS. 4 and 5 are a plan view and a cross-sectional view showing a laminated state of an electrode and a separator before an electrode assembly according to an embodiment of the present disclosure is wound, respectively. FIG. 6 is a cross-sectional view of an electrode assembly according to an embodiment of the present disclosure, taken along a line perpendicular to the axial direction, showing the relative positional relationship between a winding start portion and a winding end portion of a first electrode and a second electrode based on a winding axis.

Referring to FIGS. 4 to 6 an electrode assembly JR according to an embodiment of the present disclosure may have a structure in which a first electrode 40 and a second electrode 50 having a sheet shape and a separator 60 interposed therebetween are wound in one direction. The first electrode 40 has a longer length along the winding direction than the second electrode 50, and the first electrode 40 has a wider width along the winding axis direction than the second electrode 50. Therefore, the capacity of the first electrode 40 may be greater than the capacity of the second electrode 50. The first electrode 40 and the second electrode 50 may be a negative electrode and a positive electrode, respectively.

The separator 60 may include an inner separator 60a interposed between the first electrode 40 and the second electrode 50 and an outer separator 60b arranged on the outer side of the first electrode 40 and winding the stack of the first electrode 40, the inner separator 60a, and the second electrode 50. The outer separator 60b may be longer than the inner separator 60a. Accordingly, both ends of the outer separator 60b along the winding direction X may extend further outward than both ends of the inner separator 60a along the winding direction X.

The first electrode 40 and the second electrode 50 may have a pair of short sides and a pair of long sides. The pair of long sides extend between the pair of short sides.

The first electrode 40 includes a coated portion 40a and an uncoated portion 40b along the long side direction. Similarly, the second electrode 50 includes a coated portion 50a and an uncoated portion 50b along the long side direction. The coated portions 40a and 50a may be active material coating layers. The uncoated portions 40b and 50b may be current collectors on which active material is coated. The current collector may be a metal foil. Alternatively, the current collector may have a composite structure in which metal layers are laminated on both sides of a resin film. The coated portions 40a and 50a may be provided on both surfaces of the current collector. The uncoated portion 40b of the first electrode 40 extends in the winding direction X along the long side end of the first electrode 40. The uncoated portion 50b of the second electrode 50 extends in the winding direction X along the long side end of the second electrode 50.

The boundary between the coated portion 40a and the uncoated portion 40b of the first electrode 40 may be covered by an insulating coating layer. Similarly, the boundary between the coated portion 50a and the uncoated portion 50b of the second electrode 50 may be covered by an insulating coating layer. The insulating coating layer may include a resin and an inorganic filler.

The uncoated portion 40b of the first electrode 40 may include a plurality of segments 40c divided by a cut groove 40d formed along the winding direction X. The cut groove 40d may be formed by a laser notching process. The cut groove 40d may be a cutting slit. The cutting slit 40d may be formed by a mechanical cutting process. The first electrode 40 may not include the segment 40c in an area adjacent to the core and the outer circumference of the electrode assembly JR. The plurality of segments 40c of the first electrode 40 may protrude outwardly from the end 60d in the axial direction Y of the separator 60 along a direction away from the end 40a1 in the axial direction Y of the coated portion 40a of the first electrode 40. The plurality of segments 40c of the first electrode 40 may be bent toward the core of the electrode assembly JR to form a first bending surface area.

The uncoated portion 50b of the second electrode 50 may include a plurality of segments 50c divided by a cut groove 50d formed along the winding direction X. The cut groove 50d may be formed by a laser notching process. The cut groove 50d may be a cutting slit. The cutting slit 50d may be formed by a mechanical cutting process. The second electrode 50 may not include the segment 50c in an area adjacent to the core and the outer circumference of the electrode assembly JR. The plurality of segments 50c of the second electrode 50 may protrude outwardly from the end 60c in the axial direction Y of the separator 60 adjacent to the end 50a1 in the axial direction Y of the coated portion 50a of the second electrode 50. The plurality of segments 50c of the second electrode 50 may be bent toward the core of the electrode assembly JR to form a second bending surface area.

The width of the segments 40c, 50c roughly corresponds to the width of the lower end. The width of the segments 40c, 50c may be 1 mm to 11 mm. The width of the segment 61 may be constant or may increase stepwise or gradually from the core to the outer circumference.

The height of the segments 40c, 50c roughly corresponds to the shortest distance between the upper end and the lower end. The height of the segments 40c, 50c may be 2 mm to 10 mm. The height of the segments 40c, 50c may be constant or may increase stepwise or gradually from the core to the outer circumference.

The separation pitch P of the segments 40c, 50c corresponds to the distance between two points where a straight line passing through the lower end of the cut groove in the winding direction X intersects two straight lines extending from the side of the segments 40c, 50c at both sides of the cut groove. The separation pitch P of the segments 40c, 50c may be 0.05 mm to 1 mm. The separation pitch P of the segments 40c, 50c may be constant or may increase stepwise or gradually from the core to the outer circumference.

The shape of the segments 40c, 50c may have a geometric shape known in the art, such as a rectangle, a parallelogram, a trapezoid, a semicircle, a semi-ellipse or the like.

The present disclosure is not limited by the structure of the uncoated portions 40b, 50b. Accordingly, an embodiment in which the uncoated portions 40b, 50b are not divided into a plurality of segments 40c, 50c may also be included in the scope of the present disclosure.

In the electrode assembly JR, the first electrode 40 has a winding start portion 40i and a winding end portion 40e. Similarly, the second electrode 50 has a winding start portion 50i and a winding end portion 50e.

The present disclosure provides desirable design conditions for the positions of the winding start portions 40i, 50i and the winding end portions 40e, 50e of the first electrode 40 and the second electrode 50 so that the electrode assembly JR has good circularity when the electrode assembly JR is wound.

Referring to FIG. 6, the winding start portion 40i of the first electrode 40 may be arranged closer to the core than the winding start portion 50i of the second electrode 50, and the winding end portion 40e of the first electrode 40 may be arranged closer to the outer circumference than the winding end portion 50e of the second electrode 50.

The winding of the first electrode 40 may be started first, and then the winding of the second electrode 50 may be started. Also, the winding of the second electrode 50 may be completed, and then the winding of the first electrode 40 may be completed.

The winding start portion 40i of the first electrode 40 may be extended longer in a direction opposite to the winding direction relative to the winding start portion 50i of the second electrode 50. In addition, the winding end portion 40e of the first electrode 40 may be extended longer in the winding direction relative to the winding end portion 50e of the second electrode 50.

The first electrode 40 and the second electrode 50 may be wound clockwise as shown in FIG. 6. Conversely, the first electrode 40 and the second electrode 50 may also be wound counterclockwise.

In order to manage the circularity of the electrode assembly JR to a desired level, the relative positional relationship of the winding start portions 40i, 50i and the winding end portions 40e, 50e of the first electrode 40 and the second electrode 50 may be designed. In designing the relative positional relationship, the winding start portion 40i of the first electrode 40 may be a reference point.

For convenience of explanation, the cross-section of the electrode assembly JR is drawn so that the straight line connecting the center C of the core of the electrode assembly JR and the winding start portion 40i of the first electrode 40 faces the 12 o'clock direction.

The circularity of the electrode assembly JR is affected by where the winding end portion 50e of the second electrode 50 is located relative to the winding start portion 40i of the first electrode 40. In addition, the circularity of the electrode assembly JR is affected by where the winding end portion 40e of the first electrode 40 is located relative to the winding end portion 50e of the second electrode 50. This will be explained through examples.

The circularity may be quantitatively calculated as follows. First, the electrode assembly JR is photographed at a plurality of angles using an image sensor, and the images photographed at each angle are synthesized to obtain a three-dimensional image corresponding to the external shape of the electrode assembly JR. The electrode assembly JR may be immediately after the winding process. Next, the three-dimensional image is cut at regular intervals to obtain a plurality of cross-sections. The interval at which the cross-sections are obtained may be 0.5 mm, but may vary as desired. Each cross-section obtained from the three-dimensional image approximately has an arc shape. The fitting circle of each cross-section is calculated by circular fitting using the least square method known in the art, so that the center point of the fitting circle is determined. The fitting line connecting the center point of each fitting circle is determined as a reference line. For each cross-section, the maximum outer diameter (twice the maximum distance) and the minimum outer diameter (twice the minimum distance) of each cross-section are determined based on the distance from the perimeter of the cross-section to the reference line, and the difference between the maximum value of the maximum outer diameters and the minimum value of the minimum outer diameters may be determined as the circularity of the electrode assembly JR. The unit of circularity is mm. A smaller circularity value is desirable. This is because a smaller circularity brings the cross-section of the electrode assembly JR closer to an ideal circle.

In order to manage the circularity of the electrode assembly JR at a good level, the position of the winding end portion 50e of the second electrode 50 on the cross-section of the electrode assembly JR may be designed to be included in a fan-shaped region CO₁O₂ having a circumferential angle (Φ) corresponding to the angle along the winding direction between the winding start portion 40i of the first electrode 40 and the winding start portion 50i of the second electrode 50 with respect to the center C of the core, as shown in FIG. 6.

The fan-shaped region CO₁O₂ is a region that needs to compensate for the number of winding turns of the second electrode 50. This is because only the first electrode 40 is wound between the winding start portion 40i of the first electrode 40 and the winding start portion 50i of the second electrode 50 in the core of the electrode assembly JR, and the winding of the second electrode 50 is lacking. By including the winding end portion 50e of the second electrode 50 in the fan-shaped region CO₁O₂, the circularity of the electrode assembly JR may be managed at a good level by compensating for the lack of winding turns of the second electrode 50 near the core.

In one example, the winding end portion 50e of the second electrode 50 may be located in a sub-fan-shaped region corresponding to a range of 1/5Φ to 4/5Φ along the winding direction based on the circumferential angle (Φ) of the fan-shaped region CO₁O₂.

In another example, the winding end portion 50e of the second electrode 50 may be located in a sub-fan-shaped region corresponding to a range of 1/4Φ to 3/4Φ along the winding direction based on the circumferential angle (Φ) of the fan-shaped region CO₁O₂.

In still another example, the winding end portion 50e of the second electrode 50 may be located in a sub-fan-shaped region corresponding to a range of 1/3Φ to 2/3Φ along the winding direction based on the circumferential angle (Φ) of the fan-shaped region CO₁O₂.

In order to manage the circularity of the electrode assembly JR at a good level, the winding end portion 40e of the first electrode 40 may be designed to extend further along the winding direction than the winding end portion 50e of the second electrode 50 on the cross-section of the electrode assembly JR.

Preferably, on the cross-section of the electrode assembly JR, the winding end portion 40e of the first electrode 40 may be spaced apart from the winding end portion 50e of the second electrode 50 by 0 to 60 degrees, preferably 30 to 60 degrees, along the winding direction.

When the relative positional relationship of the winding start portions 40i, 50i and the winding end portions 40e, 50e of the first electrode 40 and the second electrode 50 is designed according to an embodiment of the present disclosure, the circularity of the electrode assembly JR may be managed at a good level.

The circularity (unit: mm) of the electrode assembly JR may be controlled to 0.30 or less, 0.25 or less, 0.24 or less, 0.20 or less, 0.18 or less, or 0.13 or less.

Preferably, the circularity of the electrode assembly JR may be managed in the range of 0.13 to 0.25.

More preferably, the circularity of the electrode assembly JR may be managed in the range of 0.13 to 0.20.

The separator 60a, 60b may include an extension 60e wound along a direction opposite to the winding direction from the winding start portion 40i of the first electrode 40. The extension 60e may form 1 to 7 winding turns, preferably 3 to 5 winding turns, in the core of the electrode assembly JR based on the winding start portion 40i of the first electrode 40. The extension 60e may contribute to improving the circularity of the electrode assembly JR by structurally supporting the core of the electrode assembly JR. The winding turns formed by the extension 60e may not include the first electrode 40 and the second electrode 50.

The inventors have conducted a simulation to confirm how the circularity of the electrode assembly JR changes depending on the relative positional relationship of the winding start portions 40i, 50i and the winding end portions 40e, 50e of the first electrode 40 and the second electrode 50.

In performing the simulation, the first electrode 40 corresponds to the negative electrode and the second electrode 50 corresponds to the positive electrode. The length and thickness of the positive electrode, the negative electrode, and the separator are set to conditions in which a large-diameter electrode assembly JR with a diameter of 44.6 mm and a height of 80 to 100 mm may be wound.

In the simulation, the outer circumference of the electrode assembly JR is gradually expanded in the radial direction by considering the thicknesses of the positive electrode, the negative electrode, and the separator while increasing the number of winding turns, and the points corresponding to the final outer circumference when the winding of the electrode assembly JR is completed are connected with a smooth curve to obtain the shape of an arc corresponding to the outer circumference. In addition, the area surrounded by the arc shape is assumed to be the cross-section of the electrode assembly JR, the maximum outer diameter and the minimum outer diameter of the arc shape are calculated, and the circularity of the electrode assembly JR is determined from the difference between the maximum outer diameter and the minimum outer diameter.

The maximum outer diameter of the arc shape determined in the simulation may correspond to the maximum value of the maximum outer diameters obtained from the cross-sections of the actually manufactured electrode assembly.

The minimum outer diameter of the arc shape determined in the simulation may correspond to the minimum value of the minimum outer diameters obtained from the cross-sections of the actually manufactured electrode assembly.

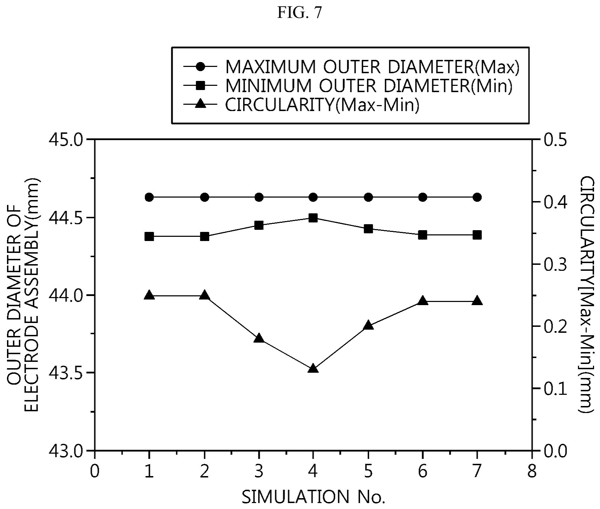

Table 1 below shows the simulation results, and FIG. 7 is a graph showing the maximum outer diameter and the minimum outer diameter of the electrode assembly obtained in each simulation and the circularity calculated therefrom. In Table 1, the angle is a value measured in the winding direction (clockwise) based on the negative electrode winding start portion. In FIG. 7, the left vertical axis represents the outer diameter of the electrode assembly, the right vertical axis represents the circularity, and the horizontal axis represents the simulation index.

**[Table 1]**

| Item | Simulation 1 | Simulat ion 2 | Simulat ion 3 | Simulat ion 4 | Simulat ion 5 | Simulat ion 6 | Simulat ion 7 |
|---|---|---|---|---|---|---|---|
| Length of positive electrode (mm) | 3950 | 3960 | 3969 | 3979 | 3984 | 3989 | 3999 |
| Thickness of positive electrode (µm) | 161 | 161 | 161 | 161 | 159 | 159.4 | 159.4 |
| Length of negative electrode (mm) | 4055 | 4065 | 4074 | 4084 | 4089 | 4094 | 4104 |
| Thickness of negative electrode (µm) | 191 | 190 | 190 | 189 | 190 | 189 | 188 |
| Length of outer separator (mm) | 4241 | 4250 | 4259 | 4269 | 4275 | 4279 | 4290 |
| Length of inner separator (mm) | 4191 | 4201 | 4210 | 4220 | 4225 | 4230 | 4240 |
| Thickness of outer separator (µm) | 12.9 | 13.2 | 13.0 | 13.2 | 13.1 | 13.0 | 13.2 |
| Thickness of inner separator (µm) | 13.0 | 13.1 | 13.0 | 13.2 | 13.1 | 12.9 | 13.1 |
| Position of positive electrode winding start portion (angle, degree) | 144 | 144 | 144 | 144 | 144 | 144 | 144 |
| Position of positive electrode winding end portion (angle, degree) | 333 | 9 | 42 | 78 | 114 | 150 | 183 |
| Position of negative electrode winding end portion (angle, degree) | 18 | 54 | 87 | 123 | 159 | 195 | 228 |
| Angle difference of winding end portions of positive electrode and negative electrode (angle, degree) | -315 | 45 | 45 | 45 | 45 | 45 | 45 |
| Maximum diameter of electrode assembly (mm) | 44.63 | 44.63 | 44.63 | 44.63 | 44.63 | 44.63 | 44.63 |
| Position of maximum diameter (angle, degree) | 333 | 9 | 42 | 78 | 114 | 150 | 183 |
| Minimum diameter of electrode assembly (mm) | 44.38 | 44.38 | 44.45 | 44.5 | 44.43 | 44.39 | 44.39 |
| Position of minimum diameter (angle, degree) | 48 | 84 | 90 | 153 | 192 | 225 | 261 |
| Circularity (mm) | 0.25 | 0.25 | 0.18 | 0.13 | 0.2 | 0.24 | 0.24 |

Seeing the simulation results in Table 1 and the graph in FIG. 7, the desirable circularity level of the electrode assembly JR may be set to 0.30 or less, 0.25 or less, 0.24 or less, 0.20 or less, 0.18 or less, or 0.13 or less. Preferably, the circularity of the electrode assembly JR may be set to 0.13 to 0.25, more preferably 0.13 to 0.20.

When the winding end portion 50e of the second electrode 50 is further extended in the winding direction relative to the winding start portion 40i of the first electrode 40 and is located within the fan-shaped region CO₁O₂, the circularity of the electrode assembly JR may be further reduced (Simulations 3, 4, and 5).

In particular, as the winding end portion 50e of the second electrode 50 is closer to the midpoint of the fan-shaped region CO₁O₂, the circularity of the electrode assembly JR may be reduced further (Simulation 4). Since the circumferential angle of the fan-shaped region CO₁O₂ is 144 degrees, the midpoint may be a point corresponding to 72 degrees, which is obtained by dividing the circumferential angle in half.

If the winding end portion 50e of the second electrode 50 extends further in the winding direction than the winding start portion 50i of the second electrode 50 beyond the fan-shaped region CO₁O₂, the circularity of the electrode assembly JR may increase again (Simulation 6).

If the winding end portion 50e of the second electrode 50 does not extend further in the winding direction than the winding start portion 40i of the first electrode 40, the circularity of the electrode assembly JR may be greater than the case where the winding end portion 50e of the second electrode 50 is located within the fan-shaped region CO₁O₂ (Simulation 1).

The simulation results described above may be similarly confirmed through the circularity measurement results of the actually manufactured electrode assembly.

To verify the results of the simulations, a total of 300 electrode assemblies (Group A) were manufactured under the same conditions as Simulation 3 except that the winding end portion of the positive electrode was positioned at 60 degrees in the winding direction relative to the winding start portion of the negative electrode, and then the circularity of each electrode assembly was measured.

In addition, a total of 300 electrode assemblies (group B) were manufactured under the same conditions as Simulation 7 except that the winding end portion of the positive electrode was positioned at 180 degrees in the winding direction relative to the winding start portion of the negative electrode, and then the circularity of the electrode assemblies was measured.

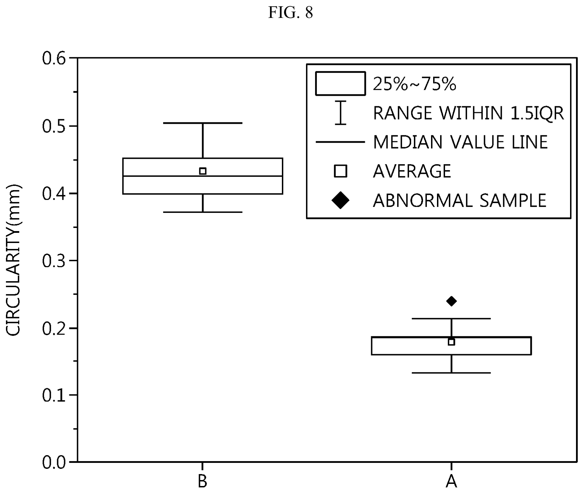

FIG. 8 is a box-and-whisker diagram showing circularity measurement results for electrode assemblies JR of a group A according to an embodiment of the present disclosure and electrode assemblies JR of a group B according to a comparative example.

Referring to FIG. 8, the electrode assemblies JR of Group A according to an embodiment of the present disclosure have good circularity and also have small deviation in circularity. Meanwhile, it may be found that the electrode assemblies JR of Group B have considerably large circularity and also have a relatively large deviation in circularity compared to Group A.

Meanwhile, it was confirmed that the circularity of the cylindrical battery including the electrode assembly JR with circularity designed according to an embodiment of the present disclosure is maintained at a good level even when the charge/discharge cycle is repeated.

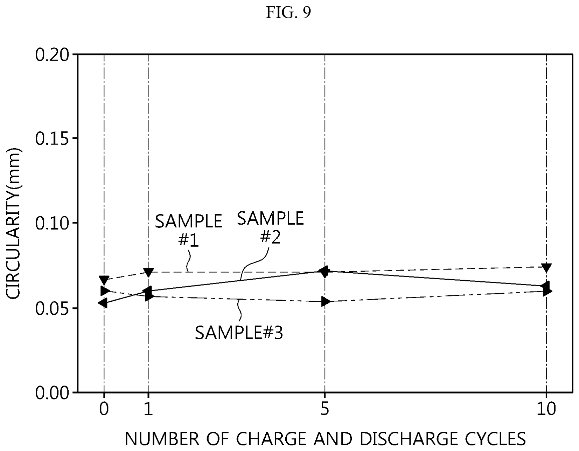

FIG. 9 is a graph showing the results of measuring the circularity of a cylindrical battery while conducting a charge/discharge cycle experiment on three cylindrical batteries including the electrode assembly manufactured according to Simulations 3, 4, and 5 of the present disclosure.

The circularity measurement method of the cylindrical battery is substantially the same as the circularity measurement method of the electrode assembly JR. The circularity of the cylindrical battery was measured a total of four times. That is, the circularity of the cylindrical battery was measured immediately after the cylindrical battery was manufactured, immediately after the activation charge was performed, immediately after five charge/discharge cycles were performed, and immediately after ten charge/discharge cycles were performed.

As illustrated in FIG. 9, it may be found that cylindrical batteries including an electrode assembly with circularity designed according to an embodiment of the present disclosure maintain circularity within a desirable range even when charge/discharge cycles are repeated up to 10 times.

A cylindrical battery including an electrode assembly JR with circularity designed according to an embodiment of the present disclosure may maintain the circularity of the cylindrical battery at a good level even when the charge/discharge cycle is repeated up to 150 cycles, which is the MOL (Middle of Life) level. To verify this, a total of eight cylindrical battery samples #1 to #8 were manufactured.

For the manufacture of samples, a positive electrode including a positive electrode active material layer coated on both sides of a current collector made of aluminum, a negative electrode including a negative electrode active material layer coated on both sides of a current collector made of copper, and a composite separator including an alumina coating layer formed on both sides of a porous substrate made of polyethylene were prepared. The positive electrode active material layer includes a lithium transition metal oxide containing nickel, cobalt, and manganese, and the negative electrode active material layer includes artificial graphite. The thicknesses of the positive electrode, the negative electrode, and the separator are 140 µm, 170 µm, and 13 µm, respectively, and the lengths of the positive electrode, the negative electrode, and the separator are 4317 mm, 4422 mm, and 4612 mm, respectively.

To manufacture a sample cylindrical battery, the positive electrode, the negative electrode, and the separator prepared as above are wound clockwise to fabricate a jelly-roll-shaped electrode assembly. When winding the electrode assembly, the winding start points of the positive electrode and the negative electrode are relatively adjusted so that the positive electrode winding end portion is included in a fan-shaped region having a circumferential angle corresponding to the angle of the winding direction between the negative electrode winding start portion and the positive electrode winding start portion. The wound electrode assembly is accommodated in the battery housing. In addition, the electrolyte is injected into the battery housing, and the open end of the battery housing is sealed with a cap plate. A non-aqueous electrolyte containing LiPF₆ as a lithium salt and containing EC (Ethylene Carbonate) and DMC (Di Ethyl Carbonate) as a solvent is used as the electrolyte.

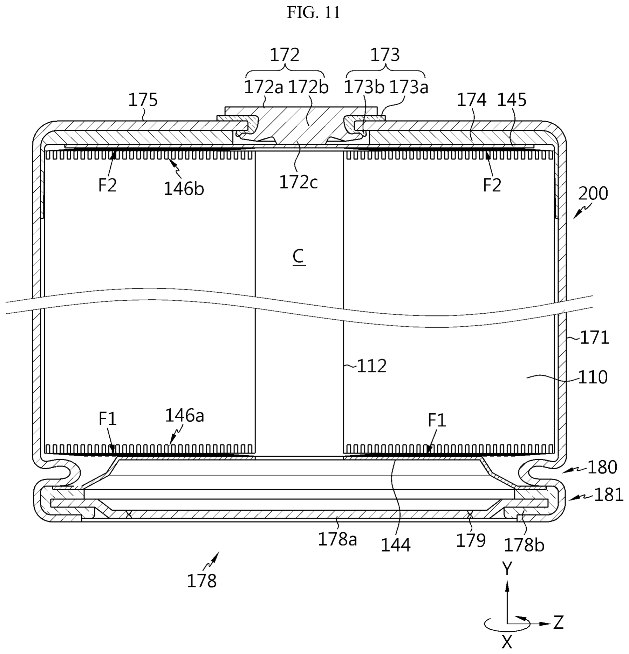

The cylindrical batteries according to samples #1 to #8 were manufactured to have the same structure as the cylindrical battery illustrated in Fig. 11, which will be described later.

Although the cylindrical batteries of samples #1 to #8 were manufactured using the same type of positive electrode, negative electrode, and separator, the positions of the winding start portions and the winding end portions of the positive electrode and the negative electrode were adjusted differently.

The cylindrical batteries of samples #1 to #8 were activated through an initial charge/discharge and then aged at room temperature for 24 hours. Then, the cylindrical batteries of samples #1 to #8 were repeatedly charged and discharged in the range of 3.0 V to 4.2 V for up to 150 cycles. The charge current (c-rate) was set to 1c and the discharge current (c-rate) was also set to 1c.

The cylindrical batteries of samples #1 to #8 were aged for 30 minutes before switching from the charge mode to the discharge mode in each cycle, and were also aged for 30 minutes before the next cycle began.

The circularity of the cylindrical batteries of samples #1 to #8 was measured at 3.6 V immediately after activation, and the circularity of the cylindrical batteries was measured at 3.6 V after 150 cycles. The circularity measurement method for the outer surface of the cylindrical battery is substantially the same as the circularity measurement method of the electrode assembly described above.

Table 2 below shows the data measured immediately after activation and after 150 cycles for each of the cylindrical batteries according to samples #1 to #8, representing the winding direction circumferential angle (Φ) between the negative electrode winding start portion and the positive electrode winding start portion, the ratio of the angle of the positive electrode winding end portion measured in the winding direction with respect to the negative electrode winding start portion to the winding direction circumferential angle, and the circularity of the outer surface of the cylindrical battery. In addition, Table 2 also shows the change in the angle of the positive electrode winding end portion measured in the winding direction with respect to the negative electrode winding start portion and the change in the circularity of the outer surface of the cylindrical battery together for each of the cylindrical batteries according to samples #1 to #8.

**[Table 2]**

| sample No. | after activation (0 Cycle) | | | after 150 Cycles | | | change amount | |
|---|---|---|---|---|---|---|---|---|
| | circumferen tial angle (Φ) | positive electrode winding end portion (°) | circularity | circumfer ential angle (Φ) | positive electrode winding end portion (°) | circularity | positive electrode winding end portion (°) | circularity |
| 1 | 144 | 28 (19.4%) | 0.119 | 154 | 53 (34.4%) | 0.086 | 25 | -0.033 |
| 2 | 143 | 42 (29.4%) | 0.192 | 144 | 64 (44.4%) | 0.127 | 22 | -0.065 |
| 3 | 147 | 51 (34.7%) | 0.158 | 154 | 69 (44.8%) | 0.117 | 18 | -0.041 |
| 4 | 150 | 36 (24.0%) | 0.133 | 166 | 67 (40.4%) | 0.108 | 31 | -0.025 |
| 5 | 146 | 35 (24.0%) | 0.136 | 153 | 63 (41.2%) | 0.107 | 28 | -0.029 |
| 6 | 143 | 79 (55.2%) | 0.138 | 155 | 107 (69.0%) | 0.095 | 28 | -0.043 |
| 7 | 160 | 77 (48.1%) | 0.177 | 172 | 98 (57,0%) | 0.13 | 21 | -0.047 |
| 8 | 152 | 79 (52.0%) | 0.149 | 161 | 102 (63.4%) | 0.105 | 23 | -0.044 |

Seeing Table 2, for the cylindrical batteries according to samples #1 to #8, it may be found that the positive electrode winding end portion is included within a fan-shaped region having a circumferential angle corresponding to the angle of the winding direction between the negative electrode winding start portion and the positive electrode winding start portion immediately after activation and even after 150 cycles of charge/discharge, and the circularity value was also as small as 0.2 or less, which is a desirable level. Through these charge/discharge cycle experiments, it was found that when a cylindrical battery is manufactured using an electrode assembly in which the position of the winding end portion of the positive electrode is designed according to an embodiment of the present disclosure, the outer surface of the cylindrical battery may maintain its cylindrical shape well even after a considerable number of charge/discharge cycles are repeated.

Meanwhile, it may be found that the angle of the winding end portion of the positive electrode measured after 150 cycles of charge and discharge in the cylindrical batteries according to samples #1 to #8 increases compared to the angle of the winding end portion measured immediately after activation. This is because the angle of the positive electrode winding end portion relatively measured relative to the winding start portion of the negative electrode increases as swelling occurs in the electrode assembly during the 150 cycles of charge and discharge repeat, which renders the negative electrode and/or the positive electrode slightly rotating due to the stress applied in the circumferential direction. For reference, since the core of the electrode assembly is empty, the rotation amount of the negative electrode winding start portion and the positive electrode winding start portion near the core is large. However, as the swelling of the electrode assembly progresses, the outer circumference of the electrode assembly comes into close contact with the inner surface of the battery housing and the interfacial adhesion between the positive electrode and the negative electrode also increases, so the rotation amount of the negative electrode and/or the positive electrode will converge to 0. Therefore, it is obvious that the angle of the positive electrode winding end portion measured based on the negative electrode winding start portion will not change significantly even if the number of charge/discharge cycles exceeds 150.

In addition, the circularity measured after 150 cycles of charge/discharge repeat in the cylindrical batteries according to samples #1 to #8 decreases slightly compared to the circularity measured immediately after activation. It seems that this is because the stress applied by the swollen electrode assembly to the entire inner surface of the battery housing during the charge/discharge cycle was distributed throughout the inner surface of the battery housing, thereby alleviating the deformation of the battery housing.

As described above, the present disclosure adjusts the relative positional relationship between the winding start portions and the winding end portions of the first electrode 40 and the second electrode 50 so that the circularity of the electrode assembly JR may be managed at a desirable level. As a result, the yield of good products may be maintained at a desired level in the process of inserting the electrode assembly JR into the battery housing.

In addition, even if the electrode assembly JR swells during the repeated charging and discharging process of the cylindrical battery, the stress applied to the battery housing is uniformly distributed in the circumferential direction to prevent deformation of the cylindrical battery, thereby maintaining the circularity of the cylindrical battery at a good level.

In addition, cylindrical batteries with well-managed circularity do not form a gap greater than the assembly tolerance with the assembly member during the process of assembling into a battery pack, so good assembly quality may be secured.

In the present disclosure, the positive electrode active material coated on the positive electrode and the negative electrode active material coated on the negative electrode may be used without limitation as long as they are active materials known in the art.

In one example, the positive electrode active material may include an alkali metal compound expressed by a general formula A[AₓM_{y}]O_{2+z} (A includes at least one element among Li, Na and K; M includes at least one element selected from Ni, Co, Mn, Ca, Mg, Al, Ti, Si, Fe, Mo, V, Zr, Zn, Cu, Mo, Sc, Zr, Ru, and Cr; x ≥ 0, 1 ≤ x+y ≤2, -0.1 ≤ z ≤ 2; and the stoichiometric coefficients x, y, z and M are selected so that the compound maintains electrical neutrality).

In another example, the positive electrode active material may be an alkali metal compound xLiM¹O₂-(1-x)Li₂M²O₃ disclosed in US6,677,082, US6,680,143, et al., wherein M¹ includes at least one element having an average oxidation state 3; M² includes at least one element having an average oxidation state 4; and 0≤x≤1).

In still another example, the positive electrode active material may be lithium metal phosphate expressed by a general formula LiₐM¹ₓFe₁₋ₓM²_{y}P_{1-y}M³_{z}O_{4-z} (M¹ includes at least one element selected from Ti, Si, Mn, Co, Fe, V, Cr, Mo, Ni, Nd, Mg, and Al; M² includes at least one element selected from Ti, Si, Mn, Co, Fe, Cr, Mo, Ni, Nd, Al, Mg, As, Sb, Si, Ge, V, and S; M³ includes a halogen element optionally including F; 0 < a ≤ 2, 0 ≤ x ≤ 1, 0 ≤ y < 1, 0 ≤ z < 1; the stoichiometric coefficient a, x, y, and z are selected so that the compound maintains electrical neutrality), or Li₃M₂(PO₄)₃ [M includes at least one element selected from Ti, Si, Mn, Fe, Co, V, Cr, Mo, Ni, Mg, and Al].

Preferably, the positive electrode active material may include primary particles and/or secondary particles in which the primary particles are aggregated.

In one example, the negative electrode active material may employ carbon material, lithium metal or lithium metal compound, silicon or silicon compound, tin or tin compound, or the like. Metal oxides such as TiO₂ and SnO₂ with a potential of less than 2V may also be used as the negative electrode active material. As the carbon material, low-crystalline carbon, high-crystalline carbon or the like may be used.

The separator may employ a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, or the like, or laminates thereof. As another example, the separator may employ a common porous nonwoven fabric, for example, a nonwoven fabric made of high melting point glass fiber, polyethylene terephthalate fiber, or the like.

At least one surface of the separator may include a coating layer of inorganic particles. It is also possible that the separator itself is made of a coating layer of inorganic particles. The particles constituting the coating layer may have a structure coupled with a binder so that interstitial volumes exist among adjacent particles.

The electrode assembly JR according to an embodiment of the present disclosure may be applied to a jelly-roll type cylindrical battery.

In a non-limiting embodiment, the cylindrical battery may be a cylindrical battery whose form factor ratio (defined as a value obtained by dividing the diameter of the cylindrical battery by height, namely a ratio of diameter (Φ) to height H) is greater than about 0.4. Here, the form factor means a value indicating the diameter and height of a cylindrical battery.

In a non-limiting embodiment, the cylindrical battery may have a diameter of 35 mm or more, preferably 40 mm to 50 mm. Also, the cylindrical battery may have a height of 70 mm or more, preferably, 75 mm to 90 mm.

In a non-limiting embodiment, the cylindrical battery according to an embodiment of the present disclosure may be, for example, 46110 battery, 4875 battery, 48110 battery, 4880 battery, or 4680 battery. In the numerical value representing the form factor, first two numbers indicate the diameter of the battery, and the remaining numbers indicate the height of the battery.

Hereinafter, the cylindrical battery according to an embodiment of the present disclosure will be described in detail.

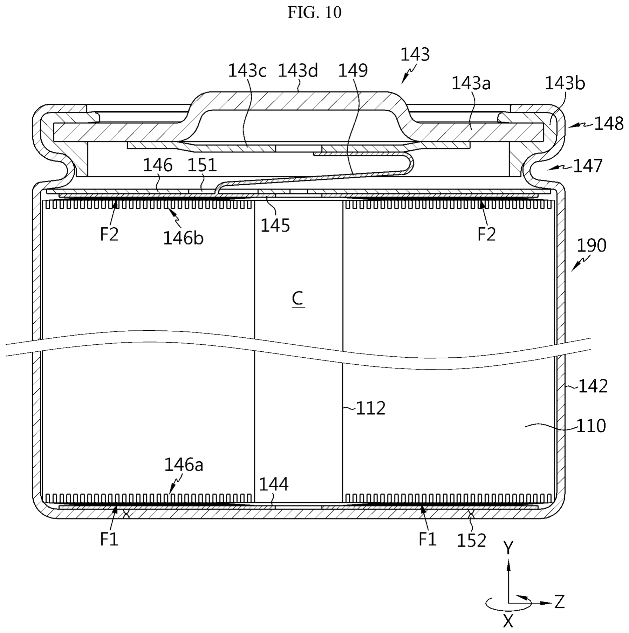

FIG. 10 is a cross-sectional view showing a cylindrical battery 190 according to an embodiment of the present disclosure, taken along the winding axis direction Y.

Referring to FIG. 10, the cylindrical battery 190 according to an embodiment of the present disclosure includes an electrode assembly 110 having a first electrode 40, a separator 60 and a second electrode 50, a battery housing 142 for accommodating the electrode assembly 110, and a sealing body 143 for sealing an open end of the battery housing 142.

The battery housing 142 is a cylindrical container with an opening at the top. The battery housing 142 is made of a conductive metal material. The battery housing 142 accommodates the electrode assembly 110 in the inner space through the top opening.

The electrode assembly 110 may have a jelly-roll shape. The electrode assembly 110 may be manufactured by sequentially stacking the outer separator 60b, the first electrode 40, the inner separator 60a, and the second electrode 50 at least once, and winding the stack around one axis, as illustrated in FIGS. 5 and 6.

The first electrode 40 may be a negative electrode and the second electrode 50 may be a positive electrode, or vice versa.

The electrode assembly 110 may include first and second bending surface areas F1, F2 on the upper and lower portions. The first current collecting plate 144 may be welded to the first bending surface area F1 of the first uncoated portion 146a, and the second current collecting plate 145 may be welded to the second bending surface area F2 of the second uncoated portion 146b.

In a non-limiting embodiment, the first uncoated portion 146a is provided on the first electrode 40 and may include a plurality of segments 40c. Also, the second uncoated portion 146b is provided on the second electrode 50 and may include a plurality of segments 50c. In a modification, the first uncoated portion 146a and the second uncoated portion 146b may not be divided into segments.

The first uncoated portion 146a and the second uncoated portion 146b do not include a segment near the core. Therefore, the core 112 of the electrode assembly 110 is not closed by the first and second bending surface areas F1 and F2. Therefore, there is no difficulty in the electrolyte injection process, and the welding process between the first current collecting plate 144 and the battery housing 142 may be easily performed by inserting a welding jig through the core 112.

The sealing body 143 may include a cap plate 143a, a first gasket 143b for providing airtightness between the cap plate 143a and the battery housing 142 and having insulation, and a connection plate 143c electrically and mechanically coupled to the cap plate 143a.

The cap plate 143a is a component made of a conductive metal material, and covers the top open end of the battery housing 142. The cap plate 143a is electrically connected to the second bending surface area F2 of the second electrode 50, and is electrically insulated from the battery housing 142 by means of the first gasket 143b. Accordingly, the cap plate 143a may function as a positive electrode terminal of the cylindrical battery 190.

The cap plate 143a is placed on the beading portion 147 formed on the battery housing 142, and is fixed by a crimping portion 148. Between the cap plate 143a and the crimping portion 148, the first gasket 143b may be interposed to secure the airtightness of the battery housing 142 and the electrical insulation between the battery housing 142 and the cap plate 143a. The cap plate 143a may have a protrusion 143d protruding upward from the center thereof.

The battery housing 142 is electrically connected to the first bending surface area F1 of the first electrode 40. Therefore, the battery housing 142 may have negative polarity, identical to the first electrode 40.

The battery housing 142 includes the beading portion 147 and the crimping portion 148 at the top thereof. The beading portion 147 is formed by pressing inward the periphery of the outer circumferential surface of the battery housing 142. The beading portion 147 has a recessed structure toward the central axis of the cylindrical battery 190. The beading portion 147 prevents the electrode assembly 110 accommodated inside the battery housing 142 from escaping through the top opening of the battery housing 142, and may function as a support portion on which the sealing body 143 is placed.

The second uncoated portion 146b of the second electrode 50 may not include a segment near the outer circumference of the electrode assembly 110 as shown in FIG. 4. Therefore, when the battery housing 142 is inwardly pressed from the outside to form the beading portion 147, the upper end of the outer circumference of the electrode assembly 110 may be prevented from being deformed.

The crimping portion 148 is formed on the beading portion 147. The crimping portion 148 has an extended and bent shape to cover the outer circumference of the cap plate 143a disposed on the beading portion 147 and a part of the upper surface of the cap plate 143a.

The cylindrical battery 190 may further include a first current collecting plate 144 and/or a second current collecting plate 145 and/or an insulator 146.

The first current collecting plate 144 is made of a conductive metal material and may be coupled to the lower surface of the electrode assembly 110. One surface of the first current collecting plate 144 may be coupled to the first bending surface area F1 of the first electrode 40 by welding, and the opposite surface may be coupled to the inner bottom surface of the battery housing 142 by welding.

In a modification, the first current collecting plate 144 may be omitted, and the first bending surface area F1 may be directly welded to the bottom surface of the battery housing 142. The welding may be laser welding. The welding laser may be directed from the outside of the battery housing 142 toward the bottom surface of the battery housing 142.

The second current collecting plate 145 is made of a conductive metal material and is coupled to the upper portion of the electrode assembly 110. The second current collecting plate 145 is coupled to the second bending surface area F2 of the second electrode 50 by welding. A lead 149 may be connected to the second current collecting plate 145. The lead 149 may extend upwardly from the electrode assembly 110 and be coupled to the connection plate 143c, or may be directly coupled to the lower surface of the cap plate 143a when the connection plate 143c is omitted.

The second current collecting plate 145 may be integrally formed with the lead 149. In this case, the lead 149 may have an elongated plate shape extending outward from near the center of the second current collecting plate 145.

The insulator 146 is made of a polymer resin with insulation and may cover the second current collecting plate 145. The insulator 146 may cover the second current collecting plate 145 at the upper surface of the second current collecting plate 145, thereby preventing direct contact between the second current collecting plate 145 and the inner circumference of the battery housing 142.

The insulator 146 has a lead hole 151 so that the lead 149 extending upward from the second current collecting plate 145 may be withdrawn therethrough. The lead 149 is drawn upward through the lead hole 151 and coupled to the lower surface of the connection plate 143c or the lower surface of the cap plate 143a.

A peripheral region of the edge of the insulator 146 may be interposed between the second current collecting plate 145 and the beading portion 147 to fix the coupled body of the electrode assembly 110 and the second current collecting plate 145. Accordingly, the movement of the coupled body of the electrode assembly 110 and the second current collecting plate 145 may be restricted in the height direction Y of the battery 190, thereby improving the assembly stability of the battery 190.

The battery housing 142 may further include a venting portion 152 formed at a lower surface thereof. The venting portion 152 corresponds to a region having a smaller thickness compared to the peripheral region of the lower surface of the battery housing 142. The venting portion 152 is structurally weak compared to the surrounding area. Accordingly, when an abnormality occurs in the cylindrical battery 190 and the internal pressure increases to a predetermined level or more, the venting portion 152 may be ruptured so that the gas generated inside the battery housing 142 is discharged to the outside.

The venting portion 152 may be formed continuously or discontinuously while drawing a circle at the lower surface of the battery housing 142. In one modification, the venting portion 152 may be formed in a straight pattern or other patterns.

FIG. 11 is a cross-sectional view showing a cylindrical battery 200 according to an embodiment of the present disclosure, taken along the winding axis direction Y.

Referring to FIG. 11, the structure of the electrode assembly of the cylindrical battery 200 is substantially the same as that of the cylindrical battery 190 in FIG. 10, and the other structure except for the electrode assembly is changed.

Specifically, the cylindrical battery 200 includes a battery housing 171 through which a rivet terminal 172 is installed. The rivet terminal 172 is installed through a perforation hole formed in the closed end of the battery housing 171. The rivet terminal 172 is riveted to the perforation hole of the battery housing 171 in a state where a second gasket 173 made of an insulating material is interposed therebetween. The rivet terminal 172 is exposed to the outside in a direction opposite to the direction of gravity.

The rivet terminal 172 includes a terminal exposing portion 172a and a terminal insert portion 172b. The terminal exposing portion 172a is exposed to the outside of the closed surface of the battery housing 171. The terminal exposing portion 172a may be located approximately at a central portion of the closed end of the battery housing 171. The maximum diameter of the terminal exposing portion 172a may be larger than the maximum diameter of the perforation hole formed in the battery housing 171. The terminal insert portion 172b may be electrically connected to the uncoated portion 146b of the second electrode 50 through approximately the central portion of the closed end of the battery housing 171. The lower edge of the terminal insert portion 172b may be riveted onto the inner surface of the battery housing 171. That is, the lower edge of the terminal insert portion 172b may have a shape curved toward the inner surface of the battery housing 171. A welding portion 172c is included at the inner side of the lower edge of the terminal insert portion 172b. The welding portion 172c may have a flat surface. The maximum diameter of the lower portion of the riveted terminal insert portion 172b may be larger than the maximum diameter of the perforation hole of the battery housing 171.

The welding portion 172c of the terminal insert portion 172b may be welded to the center portion of the second current collecting plate 145 coupled to the second bending surface area F2 of the second electrode 50.

An insulator 174 made of an insulating material may be interposed between the second current collecting plate 145 and the inner surface of the battery housing 171. The insulator 174 covers the upper portion of the second current collecting plate 145 and the top edge of the electrode assembly 110. Accordingly, it is possible to prevent the uncoated portion 146b of the second electrode 50 of the electrode assembly 110 from contacting the inner surface of the battery housing 171 having a different polarity to cause a short circuit.

The thickness of the insulator 174 corresponds to or is slightly greater than the distance between the upper surface of the second current collecting plate 145 and the inner surface of the closed end of the battery housing 171. Accordingly, the insulator 174 may contact the upper surface of the second current collecting plate 145 and the inner surface of the closed end of the battery housing 171.

The terminal insert portion 172b of the rivet terminal 172 may be welded to the second current collecting plate 145 through the perforation hole of the insulator 174. A diameter of the perforation hole formed in the insulator 174 may be larger than a diameter of the riveting portion at the lower end of the terminal insert portion 172b. Preferably, the perforation hole may expose the lower portion of the terminal insert portion 172b and the second gasket 173.

The second gasket 173 is interposed between the battery housing 171 and the rivet terminal 172 to prevent the battery housing 171 and the rivet terminal 172 having opposite polarities from electrically contacting each other. Accordingly, the upper surface of the battery housing 171 having an approximately flat shape may function as a negative electrode terminal of the cylindrical battery 200.

The second gasket 173 includes a gasket exposing portion 173a and a gasket insert portion 173b. The gasket exposing portion 173a is interposed between the terminal exposing portion 172a of the rivet terminal 172 and the battery housing 171. The gasket insert portion 173b is interposed between the terminal insert portion 172b of the rivet terminal 172 and the battery housing 171. The gasket insert portion 173b may be deformed together when the terminal insert portion 172b is riveted, so as to be in close contact with the inner surface of the battery housing 171. The second gasket 173 may be made of, for example, a polymer resin having insulation property.

The gasket exposing portion 173a of the second gasket 173 may have an extended shape to cover the outer circumference of the terminal exposing portion 172a of the rivet terminal 172. When the second gasket 173 covers the outer circumference of the rivet terminal 172, it is possible to prevent a short circuit from occurring while an electrical connection part such as a bus bar is coupled to the upper surface of the battery housing 171 and/or the rivet terminal 172. Although not shown in the drawings, the gasket exposing portion 173a may have an extended shape to cover not only the outer circumference surface of the terminal exposing portion 172a but also a part of the upper surface thereof.

When the second gasket 173 is made of a polymer resin, the second gasket 173 may be coupled to the battery housing 171 and the rivet terminal 172 by thermal fusion. In this case, airtightness at the coupling interface between the second gasket 173 and the rivet terminal 172 and at the coupling interface between the second gasket 173 and the battery housing 171 may be enhanced. Meanwhile, when the gasket exposing portion 173a of the second gasket 173 has a shape extending to the upper surface of the terminal exposing portion 172a, the rivet terminal 172 may be integrally coupled with the second gasket 173 by insert injection molding.

In the upper surface of the battery housing 171, a remaining area 175 other than the area occupied by the rivet terminal 172 and the second gasket 173 corresponds to the negative electrode terminal having a polarity opposite to that of the rivet terminal 172.

The first current collecting plate 144 is electrically connected to the first bending surface area F1 of the first electrode 40 through welding at the lower portion of the electrode assembly 110.

Preferably, the first current collecting plate 144 is electrically connected to the battery housing 171. To this end, at least a part of the edge of the first current collecting plate 144 may be interposed and fixed between the inner surface of the battery housing 171 and a first gasket 178b. In one example, at least a part of the edge of the first current collecting plate 144 may be fixed to the beading portion 180 by welding in a state of being supported on the lower surface of the beading portion 180 formed at the bottom of the battery housing 171. In one modification, at least a part of the edge of the first current collecting plate 144 may be directly welded to the inner wall surface of the battery housing 171.

A sealing body 178 for sealing the lower open end of the battery housing 171 includes a cap plate 178a and a first gasket 178b. The first gasket 178b electrically separates the cap plate 178a and the battery housing 171. A crimping portion 181 fixes the edge of the cap plate 178a and the first gasket 178b together. The cap plate 178a has a venting portion 179. The configuration of the venting portion 179 is substantially the same as in the embodiment described above. The lower surface of the cap plate 178a may be located above the lower end of the crimping portion 181. In this case, a space is formed under the cap plate 178a to smoothly perform venting. In particular, it is useful when the cylindrical battery 200 is installed so that the crimping portion 181 faces the direction of gravity.

Preferably, the cap plate 178a is made of a conductive metal material. However, since the first gasket 178b is interposed between the cap plate 178a and the battery housing 171, the cap plate 178a may not have electrical polarity. The sealing body 178 seals the open end of the lower portion of the battery housing 171 and mainly functions to discharge gas when the internal pressure of the battery 200 increases over a critical value.

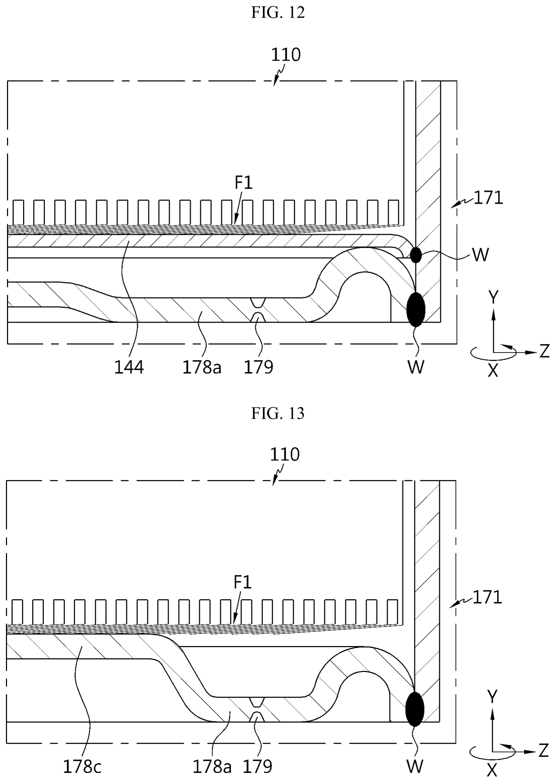

FIGS. 12 and 13 are partial cross-sectional views along the winding axis Y direction, showing the coupled structure of the cap plate 178a and the battery housing 171 according to another embodiment of the present disclosure.

Referring to FIG. 12, the sidewall of the battery housing 171 may extend in a straight line from the closed end to the open end. In this case, the beading portion and the crimping portion may be omitted, and the edge of the cap plate 178a may be directly coupled to the open end of the battery housing 171 by welding while in contact with the open end of the battery housing 171 (see welding mark W).

Also, at least a part of the edge of the first current collecting plate 144 may be coupled to the inner wall of the battery housing 171 by welding. To this end, the edge of the first current collecting plate 144 may be bent toward the open end of the battery housing 171 along the inner circumference of the battery housing 171 to be parallel to the inner circumference, and the bent portion may be welded to the inner wall of the battery housing 171. Although not shown, a part of the edge of the second current collecting plate may be bent toward the open end of the battery housing 171, an end of the bent portion may be interposed between the edge of the cap plate 178a and the open end of the battery housing 171, and the end of the bent portion, the edge of the cap plate 178a, and the open end of the battery housing 171 may be welded together.

FIG. 13 is a partial cross-sectional view along the winding axis Y direction, showing the coupled structure of the cap plate 178a and the battery housing 171 according to still another embodiment of the present disclosure.

Referring to FIG. 13, the edge of the cap plate 178a may be welded to the open end of the battery housing 171. Also, a part 178c of the inner area of the edge of the cap plate 178a may be recessed toward the first bending surface area F1 of the electrode assembly 110, and the recessed portion may be directly welded to the first bending surface area F1 (see W). In this case, as illustrated, the first current collecting plate 144 may be omitted.

Preferably, the rivet terminal 172 electrically connected to the second bending surface area F2 of the second electrode 50 is used as the positive electrode terminal. In addition, in the upper surface of the battery housing 171 electrically connected to the first bending surface area F1 of the first electrode 40 through the first current collecting plate 144, a part 175 except for the rivet terminal 172 is used as the negative electrode terminal. If two electrode terminals are located at the upper portion of the cylindrical battery 200 as above, it is possible to arrange electrical connection components such as bus bars at only one side of the cylindrical battery 200. This may bring about simplification of the battery pack structure and improvement of energy density. In addition, since the part 175 used as the negative electrode terminal has an approximately flat shape, a sufficient connection area may be secured for connecting electrical connection components such as bus bars. Accordingly, the cylindrical battery 200 may reduce the resistance at the connection portion of the electrical connection components to a desirable level.

The cylindrical battery described above may be used to manufacture a battery pack.

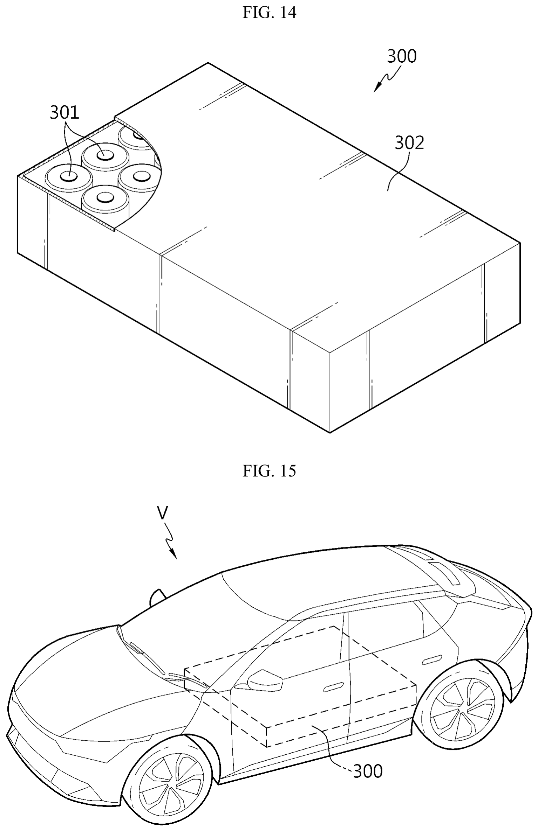

FIG. 14 is a diagram schematically showing a battery pack according to an embodiment of the present disclosure.

Referring to FIG. 14, a battery pack 300 according to an embodiment of the present disclosure includes an aggregate in which cylindrical batteries 301 are electrically connected, and a pack housing 302 for accommodating the aggregate. The cylindrical battery 301 may be any one of the batteries according to the above embodiments. In the drawing, components such as a bus bar for electrical connection of the cylindrical batteries 301, a cooling unit, and an external terminal are not depicted for convenience of illustration.

The battery pack 300 may be mounted to a vehicle. The vehicle may be, for example, an electric vehicle, a hybrid electric vehicle, or a plug-in hybrid vehicle. The vehicle includes a four-wheeled vehicle or a two-wheeled vehicle.

FIG. 15 is a diagram schematically showing a vehicle including the battery pack 300 of FIG. 14.

Referring to FIG. 15, a vehicle V according to an embodiment of the present disclosure includes the battery pack 300 according to an embodiment of the present disclosure. The vehicle V operates by receiving power from the battery pack 300 according to an embodiment of the present disclosure.

According to the present disclosure, the relative positional relationship between the winding start portion and the winding end portion of the first electrode 40 and the second electrode 50 is controlled so that the circularity of the electrode assembly JR may be managed at a desirable level. As a result, the yield of good products may be maintained at a desired level in the process of inserting the electrode assembly JR into the battery housing for manufacturing a cylindrical battery.

In addition, even if the electrode assembly JR swells during the repeated charging and discharging process of the cylindrical battery, the stress applied to the battery housing is uniformly distributed in the circumferential direction, preventing deformation of the cylindrical battery, thereby maintaining the circularity of the cylindrical battery at a good level.

In addition, cylindrical batteries with well-managed circularity do not form a gap greater than the assembly tolerance with the assembly member during the process of assembling into a battery pack, so good assembly quality may be secured.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. An electrode assembly in which a first electrode, a second electrode, and a separator interposed between the first electrode and the second electrode are wound around a winding axis to define a core and an outer circumference,
wherein a winding start portion of the first electrode is positioned closer to the core than a winding start portion of the second electrode and extends further in a direction opposite to a winding direction,
wherein a winding end portion of the first electrode is positioned closer to the outer circumference than a winding end portion of the second electrode and extends further in the winding direction, and
wherein in a cross-section of the electrode assembly perpendicular to the winding axis, the winding end portion of the second electrode is included in a fan-shaped region having a circumferential angle corresponding to an angle of the winding direction between the winding start portion of the first electrode and the winding start portion of the second electrode.

2. The electrode assembly according to claim 1,
wherein when the circumferential angle of the fan-shaped region is Φ, the winding end portion of the second electrode is located in a sub-fan-shaped region corresponding to a range of 1/5Φ to 4/5Φ along the winding direction.

3. The electrode assembly according to claim 1,
wherein when the circumferential angle of the fan-shaped region is Φ, the winding end portion of the second electrode is located in a sub-fan-shaped region corresponding to a range of 1/4Φ to 3/4Φ along the winding direction.

4. The electrode assembly according to claim 1,
wherein when the circumferential angle of the fan-shaped region is Φ, the winding end portion of the second electrode is located in a sub-fan-shaped region corresponding to a range of 1/3Φ to 2/3Φ along the winding direction.

5. The electrode assembly according to claim 1,
wherein in the cross-section of the electrode assembly, the winding end portion of the first electrode is spaced apart from the winding end portion of the second electrode by 0 to 60 degrees along the winding direction.

6. The electrode assembly according to claim 1,
wherein in the cross-section of the electrode assembly, the winding end portion of the first electrode is spaced apart from the winding end portion of the second electrode by 30 to 60 degrees along the winding direction.

7. The electrode assembly according to claim 1,
wherein when a plurality of cross-sections for the electrode assembly are obtained at a plurality of points along a winding axis direction, a maximum outer diameter and a minimum outer diameter of each cross-section are determined, and a difference between a maximum value of the maximum outer diameters and a minimum value of the minimum outer diameters for the plurality of cross-sections is defined as a circularity (unit: mm) of the electrode assembly,
the circularity is 0.30 or less, 0.25 or less, 0.24 or less, 0.20 or less, 0.18 or less, or 0.13 or less.

8. The electrode assembly according to claim 7,
wherein the circularity is 0.13 or more and 0.25 or less.

9. The electrode assembly according to claim 1,
wherein the separator includes an extension wound in the direction opposite to the winding direction from the winding start portion of the first electrode, and the extension forms a plurality of winding turns in the core.

10. The electrode assembly according to claim 1,
wherein the first electrode includes a first electrode coated portion, on which an active material layer is coated, and a first electrode uncoated portion along the winding direction,
wherein the first electrode uncoated portion includes a plurality of segments provided at a long side end of the first electrode and separated by a cut groove formed along the winding direction,
wherein the plurality of segments of the first electrode uncoated portion protrude outwardly from an axial end of the separator along a direction away from an axial end of the first electrode coated portion, and
wherein the plurality of segments of the first electrode uncoated portion are bent toward the core to form a first bending surface area.

11. The electrode assembly according to claim 1,
wherein the second electrode includes a second electrode coated portion, on which an active material layer is coated, and a second electrode uncoated portion along the winding direction,
wherein the second electrode uncoated portion includes a plurality of segments provided at a long side end of the second electrode and separated by a cut groove formed along the winding direction,
wherein the plurality of segments of the second electrode uncoated portion protrude outwardly from an axial end of the separator adjacent to an axial end of the first electrode coated portion, and
wherein the plurality of segments of the second electrode uncoated portion are bent toward the core to form a second bending surface area.

12. A cylindrical battery comprising:
the electrode assembly according to any one of claims 1 to 11;
a battery housing having an open end and a closed end and configured to accommodate the electrode assembly through the open end, the battery housing being electrically connected to the first electrode;
a sealing body configured to seal the open end of the battery housing; and
a terminal electrically connected to the second electrode and having a surface exposed to an outside of the battery housing.

13. The cylindrical battery according to claim 12,
wherein the electrode assembly includes an uncoated portion of the first electrode exposed to an outside of the separator along the winding axis direction, and
wherein the cylindrical battery further comprises a first current collecting plate configured to electrically connect the uncoated portion of the first electrode and an inner surface of the battery housing.

14. The cylindrical battery according to claim 13,
wherein the sealing body includes a cap plate configured to cover the open end of the battery housing, and a gasket interposed between an edge of the cap plate and the open end, and
wherein an edge of the first current collecting plate is interposed between the gasket and a sidewall of the battery housing.

15. The cylindrical battery according to claim 14,
wherein the battery housing includes a beading portion recessed inward toward the winding axis near the open end, and
wherein an edge of the first current collecting plate is in contact with an inner surface of the beading portion.

16. The cylindrical battery according to claim 12,
wherein the terminal is installed in a perforation hole formed in the closed end of the battery housing to be insulated from the battery housing,
wherein the terminal includes a terminal exposing portion exposed through an outer surface of the closed end, and a terminal insert portion extending from the terminal exposing portion and inserted into the battery housing through the perforation hole, and
wherein a lower edge of the terminal insert portion is riveted toward an inner surface of the closed end.

17. The cylindrical battery according to claim 16,
wherein the electrode assembly includes an uncoated portion of the second electrode exposed to an outside of the separator along the axial direction, and
wherein the cylindrical battery further comprises a second current collecting plate configured to electrically connect the uncoated portion of the second electrode and a lower end of the terminal insert portion.

18. The cylindrical battery according to claim 12,
wherein the sealing body includes a cap plate that seals the open end of the battery housing, and
wherein the terminal is the cap plate.

19. The cylindrical battery according to claim 13,
wherein the sealing body includes a cap plate that covers the open end of the battery housing, and
wherein an edge of the cap plate is coupled to the open end.

20. The cylindrical battery according to claim 19,
wherein the cap plate is coupled with the first current collecting plate or the uncoated portion of the first electrode.

21. A battery pack comprising a plurality of cylindrical batteries according to any one of claims 12 to 20.

22. A vehicle comprising the battery pack according to claim 21.
